# EUROPÄISCHE PATENTSCHRIFT

(11) **EP 3 115 236 B1**
(45) Veröffentlichungstag und Bekanntmachung des Hinweises auf die Patenterteilung: **21.10.2020**
(21) Anmeldenummer: 15175753.1
(22) Anmeldetag: 07.07.2015
(51) Int. Cl.: B60H 1/22, H05B 3/02

(54) **ELEKTRISCHE HEIZVORRICHTUNG UND HEIZUNGS- ODER KLIMAANLAGE MIT EINER SOLCHEN ELEKTRISCHEN HEIZVORRICHTUNG**
ELECTRIC HEATING DEVICE AND HEATING OR AIR CONDITIONING FACILITY WITH SUCH AN ELECTRICAL HEATING DEVICE
DISPOSITIF DE CHAUFFAGE ELECTRIQUE ET INSTALLATION DE CHAUFFAGE OU CLIMATISEUR DOTE(E) D'UN TEL DISPOSITIF DE CHAUFFAGE ELECTRIQUE

(43) Veröffentlichungstag der Anmeldung: 11.01.2017
(73) Patentinhaber: MAHLE International GmbH, 70376 Stuttgart (DE)
(72) Erfinder: Gries, Jean-Philippe, 68000 Colmar (FR); Celebi, Cem, 68130 Carspach (FR); Heitz, Jérôme, 68100 Mulhouse (FR)
(74) Vertreter: Grauel, Andreas

(56) Entgegenhaltungen:
- EP-A1- 2 863 143
- FR-A1- 2 806 967
- FR-A1- 2 915 654

## Beschreibung

### Technisches Gebiet

Die Erfindung betrifft eine elektrische Heizvorrichtung gemäß dem Oberbegriff von Anspruch 1. Darüber hinaus betrifft die Erfindung eine Heizungs- oder Klimaanlage mit einer solchen elektrischen Heizvorrichtung,

### Stand der Technik

Für die Beheizung einer Kraftfahrzeugkabine wird häufig die vom Kraftfahrzeugmotor erzeugte Abwärme genutzt, welche entsteht, nachdem der Kraftfahrzeugmotor gestartet ist. Jedoch steht die Abwärme in einem für die gewünschte Heizleistung ausreichendem Maß erst nach Ablauf einer Warmlaufphase zur Verfügung. Besonders verbrauchsarme Kraftfahrzeugmotoren produzieren außerdem meist nur sehr wenig Abwärme. Das gleiche gilt für Kraftfahrzeuge mit einem Elektromotor als Antriebsmotor. Vor diesem Hintergrund ist es sinnvoll, insbesondere bei kalten Außentemperaturen, elektrische Heizvorrichtungen bzw. elektrische Zusatzheizvorrichtungen einzusetzen.

Die DE 101 02 671 A1 offenbart eine elektrische Heizung für ein Kraftfahrzeug mit einer Schaltungsträgerplatte, die an ihrer Unterseite stoffschlüssig mit einer Metallplatte verbunden ist. Die Metallplatte ist dabei gegenüber Leiterbahnen, welche sich auf der Unterseite der Schaltungsträgerplatte befinden und eine Spannung führen können, elektrisch isoliert. Die Metallplatte soll Abwärme von der Schaltungsträgerplatte aufnehmen und diese über wärmeleitende Verbinder an einen Kühlkörper ableiten, welcher in einem gewissen Abstand zur Schaltungsträgerplatte angeordnet ist. Die FR2915654A1 offenbart ebenso eine elektrische Heizung für ein Kraftfahrzeug.

### Darstellung der Erfindung, Aufgabe, Lösung, Vorteile

Ausgehend von diesem Stand der Technik ist es die Aufgabe der Erfindung, eine weiter verbesserte elektrische Heizvorrichtung bereitzustellen, die insbesondere energie-, material- und bauraumsparend ausgebildet ist und dennoch eine ausreichende Kühlung elektronischer Komponenten der elektrischen Heizvorrichtung ermöglicht.

Darüber hinaus ist es die Aufgabe der Erfindung, eine Heizungs- oder Klimaanlage zu schaffen, in welcher eine solche elektrische Heizvorrichtung einsetzbar ist.

Die Aufgabe zur elektrischen Heizvorrichtung wird mit den Merkmalen von Anspruch 1 gelöst.

Ein Ausführungsbeispiel der Erfindung betrifft eine elektrische Heizvorrichtung, insbesondere für ein Kraftfahrzeug, mit einem Heizelement und mit einer Steuereinheit, wobei die Steuereinheit eine Leiterplatte mit zumindest einer elektronischen Schaltung aufweist und wobei die Steuereinheit zumindest einen Leistungstransistor aufweist, welcher mit der zumindest einen elektronischen Schaltung elektrisch verbunden ist, wobei die Steuereinheit zumindest einen ersten Metallträger aufweist, wobei der zumindest eine Leistungstransistor auf dem zumindest einen ersten Metallträger angeordnet und mit dem zumindest einen ersten Metallträger verbunden ist. Dabei bedeutet der Begriff des Verbundenseins, dass zumindest eine thermische Verbindung und gegebenenfalls auch eine elektrische Verbindung vorliegt. Hierdurch wird eine elektrische Heizvorrichtung mit einer Steuereinheit bereitgestellt, deren Leistungstransistoren auf eine kostengünstige und konstruktiv einfach umzusetzende Weise mit einer effektiven Wärmeableitung ausgestattet sind. Folglich kann auf die üblicherweise eingesetzten Kühlmethoden teilweise verzichtet werden, wodurch sich der Aufbau der elektrischen Heizvorrichtung vereinfacht und insgesamt bauraumsparender wird. Darüber hinaus können in der Steuereinheit Leistungstransistoren mit einem größeren Einschaltwiderstand verwendet werden.

Bei einer weiteren Ausführungsform der elektrischen Heizvorrichtung weist die Steuereinheit zumindest einen zweiten Metallträger auf, wobei der zumindest eine erste Metallträger mit dem zumindest einen zweiten Metallträger verbunden ist. Dabei bedeutet diese Verbindung wieder zumindest eine thermische und optional eine elektrische Verbindung. Die Wärmeableitung von den elektronischen Bauteilen über die Metallträger wird hierdurch noch weiter verbessert und einer Erwärmung der Leiterplatte entgegen gewirkt.

Ein vorteilhaftes Ausführungsbeispiel der elektrischen Heizvorrichtung sieht vor, dass der zumindest eine Leistungstransistor und der zweite Metallträger benachbart zueinander angeordnet und mit dem ersten Metallträger verbunden sind. Dabei bedeutet dies wieder zumindest eine thermische und optional eine elektrische Verbindung.

Ein zusätzliches Ausführungsbeispiel der elektrischen Heizvorrichtung sieht vor, dass auf dem zumindest einen ersten Metallträger und/oder auf dem zumindest einen zweiten Metallträger zumindest ein Anschluss für eine Stromversorgung angeordnet ist. Dadurch wird die im Bereich des Anschlusses erzeugte Abwärme ebenfalls effektiv abgeleitet.

Bei einer weiteren Ausführungsform der elektrischen Heizvorrichtung sind die Leiterplatte und der zumindest eine erste Metallträger im Wesentlichen gemeinsam in einer ersten Ebene angeordnet, wobei zwischen der Leiterplatte und dem zumindest einen ersten Metallträger eine Lücke angeordnet ist, wobei die Leiterplatte zumindest ein benachbart zur Lücke angeordnetes erstes Verbindungselement aufweist und der zumindest eine erste Metallträger zumindest ein benachbart zur Lücke angeordnetes zweites Verbindungselement aufweist, wobei das zumindest eine erste Verbindungselement und das zumindest eine zweite Verbindungselement komplementär zueinander ausgebildet sind und lösbar und/oder unlösbar miteinander verbindbar sind. Hiermit wird eine feste und einfache Zusammenfügung zweier Bauteile der Steuereinheit ermöglicht.

Ein vorteilhaftes Ausführungsbeispiel der elektrischen Heizvorrichtung sieht vor, dass der zumindest eine erste Metallträger und/oder der zumindest eine zweite Metallträger aus Kupfer und/oder aus einer Kupferlegierung oder aus Aluminium oder aus einer Aluminiumlegierung ausgebildet ist/sind. In vorteilhafter Weise können der erste Metallträger und/oder der zweite Metallträger dadurch zum einen für die Wärmeableitung und zum anderen als elektrische Leitung verwendet werden.

Bei einer besonders vorteilhaften Ausführungsform der elektrischen Heizvorrichtung sind die Leiterplatte und der zumindest eine zweite Metallträger, insbesondere durch Löten oder durch Kleben, miteinander verbunden.

Ein weiteres Ausführungsbeispiel der elektrischen Heizvorrichtung sieht vor, dass der zumindest eine Leistungstransistor und der erste Metallträger durch Löten oder durch Kleben miteinander verbunden sind.

Bei einer zusätzlichen Ausführungsform der elektrischen Heizvorrichtung weist der zumindest eine Leistungstransistor zumindest eine elektrische Verbindung auf, welche mit der Leiterplatte und/oder mit der elektronischen Schaltung, insbesondere durch Löten oder Kleben, verbunden ist. Dies vereinfacht die Fertigung der elektrischen Heizvorrichtung.

Ein vorteilhaftes Ausführungsbeispiel sieht vor, dass die elektrische Heizvorrichtung benachbart zu oder in einem Luftkanal einer Heizungs- oder Klimaanlage anordenbar ist, wobei die Leiterplatte und/oder der erste Metallträger und/oder der zweite Metallträger in den Luftkanal und/oder in einen durch den Luftkanal strömenden Luftstrom und/oder einen vom Luftstrom abgezweigten Teilluftstrom hineinragbar anordenbar ist/sind.

Die Aufgabe zur Heizungs- oder Klimaanlage wird mit den Merkmalen des Anspruchs 10 gelöst.

Eine vorteilhafte Ausführungsform der Heizungs- oder Klimaanlage sieht vor, dass in der Heizungs- oder Klimaanlage zumindest eine gemäß der oben genannten Beschreibung ausgebildete elektrische Heizvorrichtung anordenbar ist. Dadurch wird eine Heizungs- oder Klimaanlage geschaffen, die auch in Kraftfahrzeugen mit modernen, verbrauchsoptimierten und nur in geringem Maß Abwärme produzierenden Motoren sowie auch in Fahrzeugen mit Elektromotoren eine ausgesprochen gute Heizleistung erzeugt. Darüber hinaus werden empfindliche zu kühlende Komponenten der in einer Heizungs-oder Klimaanlage angeordneten elektrischen Heizvorrichtung auf energie-, material- und bauraumsparende Weise gekühlt.

Weitere vorteilhafte Ausgestaltungen sind durch die nachfolgende Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Figuren der Zeichnung näher erläutert. Es zeigen:
- Fig. 1: eine Draufsicht auf eine schematische Darstellung einer elektrischen Heizvorrichtung,
- Fig. 2: eine schematische seitliche Ansicht einer elektrischen Heizvorrichtung gemäß Figur 1,
- Fig. 3: eine schematische seitliche Ansicht einer weiteren Ausführungsform einer elektrischen Heizvorrichtung, und
- Fig. 4: eine schematische seitliche Ansicht einer weiteren Ausführungsform einer elektrischen Heizvorrichtung.

### Bevorzugte Ausführung der Erfindung

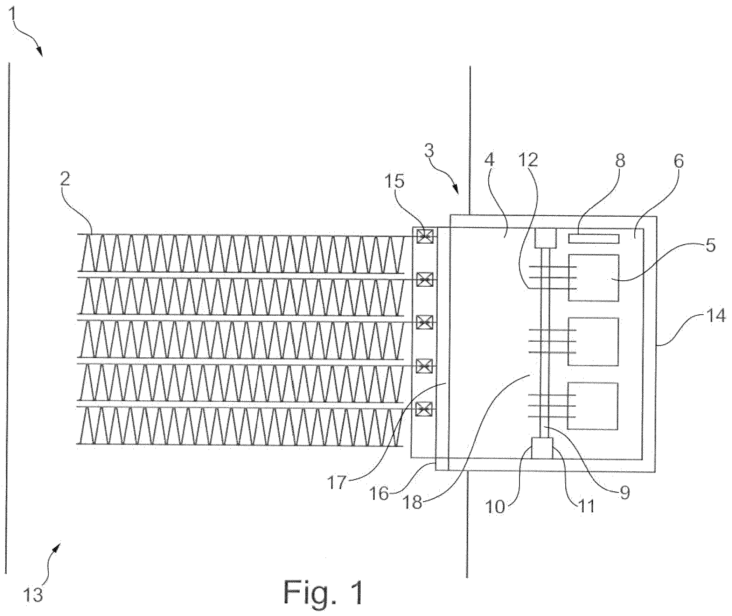

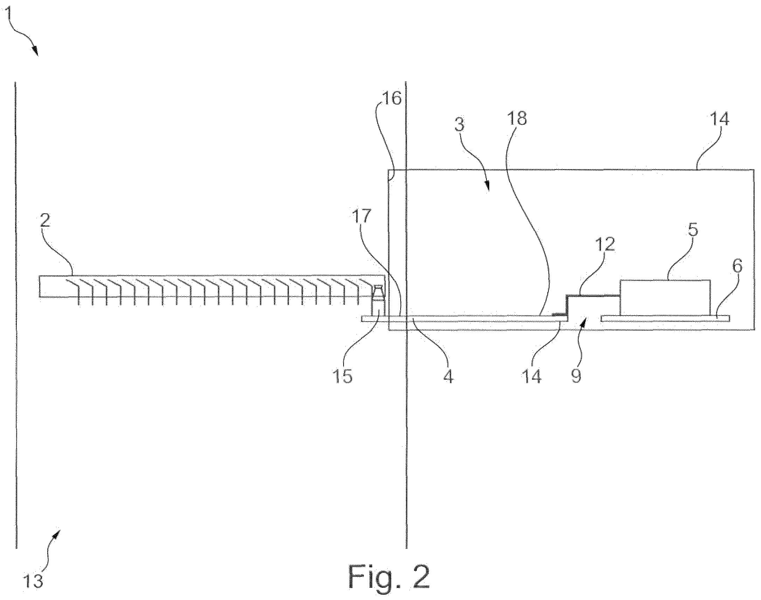

Die Figuren 1 und 2 zeigen jeweils eine schematische Ansicht eines ersten Ausführungsbeispiels einer elektrischen Heizvorrichtung 1.

Die elektrische Heizvorrichtung 1 kann in einer nicht dargestellten Heizungs-und/oder Klimaanlage eines Kraftfahrzeugs angeordnet sein.

Die elektrische Heizvorrichtung 1 weist ein Gehäuse 14 und eine Steuereinheit 3 mit einer Leiterplatte 4 auf. Die Leiterplatte 4 kann eine starre oder eine flexible Struktur aufweisen. Darüber hinaus kann es sich in verschiedenen Ausführungsformen der elektrischen Heizvorrichtung 1 bei der Leiterplatte 4 um eine einlagige Leiterplatte 4, eine zweilagige Leiterplatte 4 oder eine mehrlagige Leiterplatte 4 handeln.

Darüber hinaus weist die elektrische Heizvorrichtung 1 ein registerförmiges bzw. blockförmiges Heizelement 2 auf, welches optional von einem aus Metall oder Kunststoff gefertigten Rahmen eingefasst ist. Der Aufbau des Heizelements 2 kann in unterschiedlichen Ausführungsbeispielen variieren. In dem in den Figuren 1 und 2 dargestellten Ausführungsbeispiel weist das Heizelement 2 eine Anzahl von Positive-Temperature-Coefficient-Elementen (PTC-Elementen) und jeweils benachbart zu den PTC-Elementen angeordnete Kontaktbleche und Wärmeleitrippen auf. In alternativen Ausführungsformen kann das Heizelement 2 anstatt der PTC-Elemente auch andere Formen von Widerstandsheizelementen aufweisen. Das Heizelement 2 ist über fünf auf der Leiterplatte 4 angeordnete Stecker 15 im Bereich einer ersten Gehäuseseite 16 mit der Leiterplatte 4 verbunden. In alternativen Ausführungsbeispielen ist das Heizelement 2 auf andere Weise mit der Leiterplatte 4 verbunden. Auch die Anzahl der Stecker 15 kann variieren.

Ein erster Leiterplattenbereich 17, in welchem der zumindest eine Stecker 15 angeordnet ist, ragt aus dem Gehäuse 14 heraus. In alternativen Ausführungsbeispielen ragt kein Bereich der Leiterplatte 4 aus dem Gehäuse 14 heraus. Das Heizelement 2 und der erste Leiterplattenbereich 17 ragen beispielhaft in den Luftkanal 13 der Heizungs- oder Klimaanlage hinein. Alternativ kann der erste Leiterplattenbereich 17 in einen anderweitigen zu erwärmenden Luftstrom, beispielsweise einen aus dem Bereich des Luftkanals 13 abgezweigten Teilluftstrom, hineinragen.

Das Heizelement 2 und die Leiterplatte 4 sind im Wesentlichen in einer ersten Ebene angeordnet, welche in dem in den Figuren 1 und 2 dargestellten Ausführungsbeispiel den Strömungsquerschnitt des Luftkanals 13 vertikal schneidet.

In der ersten Ebene und benachbart zu einem von dem Heizelement 2 wegweisenden zweiten Leiterplattenbereich 18 ist in dem in den Figuren 1 und 2 dargestellten Ausführungsbeispiel ein erster im Wesentlichen plattenförmiger Metallträger 6 angeordnet. Dabei ist zwischen der Leiterplatte 4 und dem ersten Metallträger 6 eine Beabstandung in Form einer Lücke 9 angeordnet. Die Maße der Lücke 9 und des ersten Metallträgers 6 sowie die Anzahl der ersten Metallträger 6 können in unterschiedlichen Ausführungsformen variieren.

In der Figur 1 ist dargestellt, dass im zweiten Leiterplattenbereich 18 und benachbart zur Lücke 9 zwei erste Verbindungselemente 10 angeordnet sind. Der erste Metallträger 6 weist in einem dem zweiten Leiterplattenbereich 18 zugewandten ersten Metallträgerbereich 19 und benachbart zur Lücke 9 angeordnet zwei zweite Verbindungselemente 11 auf. Jeweils ein erstes Verbindungselement 10 und ein zweites Verbindungselement 11 sind komplementär zueinander ausgebildet und sind lösbar oder unlösbar miteinander verbindbar. Die Anzahl und die Ausführungsform des zumindest einen ersten Verbindungselements 10 und des zumindest einen zweiten Verbindungselements 11 können in verschiedenen Ausführungsbeispielen variieren.

In Figur 1 ist dargestellt, dass auf dem ersten Metallträger 6 drei Leistungstransistoren 5 angeordnet sind. In alternativen Ausführungsbeispielen weisen/weist der erste Metallträger 6 und/oder ein anderer Teil der Steuereinheit 3 einen, zwei, vier, fünf, sechs oder eine Mehrzahl an Leistungstransistoren 5 auf. Der zumindest eine Leistungstransistor 5 kann insbesondere als ein Metall-Oxid-Halbleiter-Feldeffekttransistor ausgebildet sein.

Darüber hinaus weist der erste Metallträger 6 einen Anschluss für eine Stromversorgung 8 auf, mittels dessen die elektrische Heizvorrichtung 1 an ein nicht dargestelltes Bordstromnetz des Kraftfahrzeugs angeschlossen ist.

Darüber hinaus können die Leiterplatte 4 und/oder der erste Metallträger 6 und/oder ein anderer Teil der Steuereinheit 3 zumindest einen nicht dargestellten Anschluss für eine elektronische Verbindung der elektrischen Heizvorrichtung 1 mit einer Ansteuerlogik aufweisen, mittels dessen die elektrische Heizvorrichtung 1 beispielsweise über einen im Kraftfahrzeug angeordneten Bordcomputer ansteuerbar ist.

Der zumindest eine Leistungstransistor 5 ist über eine elektrische Verbindung 12 mit einer auf der Leiterplatte 4 angeordneten nicht dargestellten elektronischen Schaltung verbunden. Dabei überbrückt die elektrische Verbindung 12 die Lücke 9. Die elektrische Verbindung 12 ist mit der elektronischen Schaltung und/oder mit der Leiterplatte 4 beispielhaft durch ein Lot verbunden.

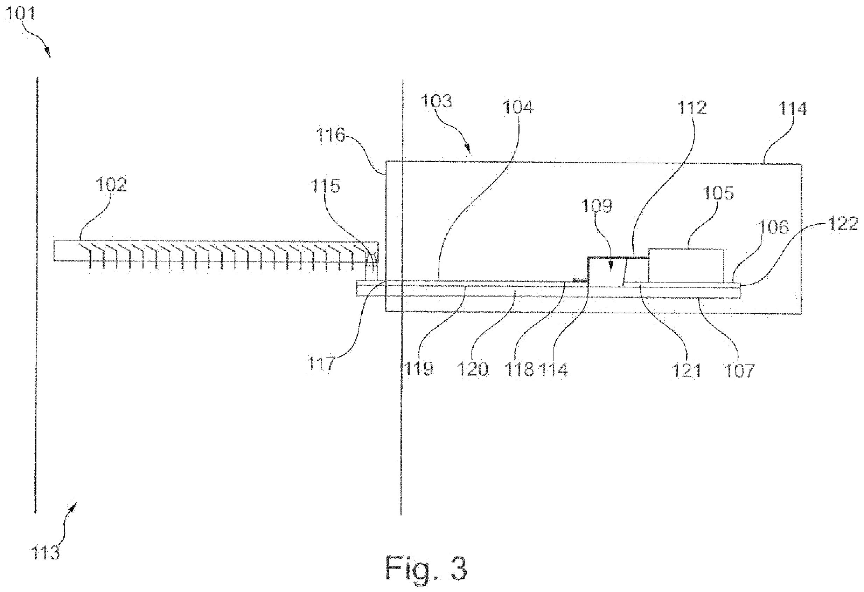

In der Figur 3 ist ein Ausführungsbeispiel einer elektrischen Heizvorrichtung 101 schematisch dargestellt. Die Heizvorrichtung 101 ist im Wesentlichen ähnlich wie die elektrische Heizvorrichtung 1 aufgebaut. Die elektrische Heizvorrichtung 101 kann in einer nicht dargestellten Heizungs- und/oder Klimaanlage eines Kraftfahrzeugs angeordnet sein.

Die elektrische Heizvorrichtung 101 weist ein Gehäuse 114 und eine Steuereinheit 103 mit einer Leiterplatte 104 auf. Die Leiterplatte 104 kann eine starre oder eine flexible Struktur aufweisen. Darüber hinaus kann es sich in verschiedenen Ausführungsformen der elektrischen Heizvorrichtung 101 bei der Leiterplatte 104 um eine einlagige Leiterplatte 104, eine zweilagige Leiterplatte 104 oder eine mehrlagige Leiterplatte 104 handeln.

Darüber hinaus weist die elektrische Heizvorrichtung 101 ein registerförmiges bzw. blockförmiges Heizelement 102 auf, welches optional von einem aus Metall oder Kunststoff gefertigten Rahmen eingefasst ist. Der Aufbau des Heizelements 102 kann in unterschiedlichen Ausführungsbeispielen variieren. In dem in der Figur 3 dargestellten Ausführungsbeispiel weist das Heizelement 102 eine Anzahl von PTC-Elementen und jeweils benachbart zu den PTC-Elementen angeordnete Kontaktbleche und Wärmeleitrippen auf. In alternativen Ausführungsformen kann das Heizelement 102 anstatt der PTC-Elemente auch andere Formen von Widerstandsheizelementen aufweisen. Das Heizelement 102 ist über einen auf der Leiterplatte 104 angeordneten Stecker 115 im Bereich einer ersten Gehäuseseite 116 mit der Leiterplatte 104 verbunden. In alternativen Ausführungsbeispielen ist das Heizelement 102 auf andere Weise mit der Leiterplatte 104 verbunden. In Figur 3 ist aufgrund der seitlichen Ansicht nur ein im Bereich der ersten Gehäuseseite 116 angeordneter Stecker 115 dargestellt. In unterschiedlichen Ausführungsbeispielen kann die Anzahl der Stecker 115 variieren.

Ein erster Leiterplattenbereich 117, in welchem der zumindest eine Stecker 115 angeordnet ist, ragt aus dem Gehäuse 114 heraus. In alternativen Ausführungsbeispielen ragt kein Bereich der Leiterplatte 104 aus dem Gehäuse 114 heraus. Das Heizelement 102 und der erste Leiterplattenbereich 117 ragen beispielhaft in den Luftkanal 113 der Heizungs- oder Klimaanlage hinein. Alternativ kann der erste Leiterplattenbereich 117 in einen anderweitigen zu erwärmenden Luftstrom, beispielsweise einen aus dem Bereich des Luftkanals 113 abgezweigten Teilluftstrom, hineinragen.

Das Heizelement 102 und die Leiterplatte 104 sind im Wesentlichen in einer ersten Ebene angeordnet, welche in dem in der Figur 3 dargestellten Ausführungsbeispiel den Strömungsquerschnitt des Luftkanals 113 vertikal schneidet.

In der ersten Ebene und benachbart zu einem vom Heizelement 102 wegweisenden zweiten Leiterplattenbereich 118 ist in dem in der Figur 3 dargestellten Ausführungsbeispiel ein erster im Wesentlichen plattenförmiger Metallträger 106 angeordnet. Dabei ist zwischen dem zweiten Leiterplattenbereich 118 und dem ersten Metallträger 106 eine Beabstandung in Form einer Lücke 109 angeordnet. Die Maße der Lücke 109 und des ersten Metallträgers 106 sowie die Anzahl der ersten Metallträger 106 können in unterschiedlichen Ausführungsformen variieren.

In Figur 3 ist aufgrund der seitlichen Ansicht nur ein auf dem ersten Metallträger 106 angeordneter Leistungstransistor 105 dargestellt. In unterschiedlichen Ausführungsbeispielen kann die Anzahl der Leistungstransistoren 105 variieren. Der zumindest eine Leistungstransistor 105 kann insbesondere als ein Metall-Oxid-Halbleiter-Feldeffekttransistor ausgebildet sein.

Darüber hinaus weist die Steuereinheit 103 einen in der Figur 3 nicht dargestellten Anschluss für eine Stromversorgung auf, mittels dessen die elektrische Heizvorrichtung 101 an ein Bordstromnetz des Kraftfahrzeugs angeschlossen ist.

Darüber hinaus können die Leiterplatte 104 und/oder der erste Metallträger 106 und/oder ein anderer Teil der Steuereinheit 103 zumindest einen nicht dargestellten Anschluss für eine elektronische Verbindung der elektrischen Heizvorrichtung 101 mit einer Ansteuerlogik aufweisen, mittels dessen die elektrische Heizvorrichtung 101 beispielsweise über einen im Kraftfahrzeug angeordneten Bordcomputer ansteuerbar ist.

Der zumindest eine Leistungstransistor 105 ist über eine elektrische Verbindung 112 mit einer auf der Leiterplatte 104 angeordneten nicht dargestellten elektronischen Schaltung verbunden. Dabei überbrückt die elektrische Verbindung 112 die Lücke 109. Die elektrische Verbindung 112 ist beispielhaft mit der elektronischen Schaltung und/oder mit der Leiterplatte 104 durch ein Lot verbunden.

Die Leiterplatte 104 weist eine Leiterplattenunterseite 119 auf, welche mit einer Kontaktseite 120 eines zweiten Metallträgers 107 verbunden ist. Der erste Metallträger 106 weist eine Metallträgerunterseite 121 auf, welche im Wesentlichen über ihre gesamte Fläche mit der Kontaktseite 120 des zweiten Metallträgers 107 in Kontakt steht und/oder mit der Kontaktseite 120 verbunden ist. Dabei erstreckt sich der zweite Metallträger 107 im Wesentlichen von einer von der Leiterplatte 104 wegweisenden Metallträgerkante 122 des ersten Metallträgers 106 bis in den Bereich der ersten Gehäuseseite 116. Dabei ragt der zweite Metallträger 107 beispielhaft im Bereich der ersten Gehäuseseite 116 aus dem Gehäuse 114 heraus und in den Luftkanal 113 der Heizungs- oder Klimaanlage hinein. Alternativ kann der aus dem Gehäuse 114 heraus ragende Teil des zweiten Metallträgers 107 in einen anderweitigen zu erwärmenden Luftstrom, beispielsweise einen aus dem Bereich des Luftkanals 113 abgezweigten Teilluftstrom, hineinragen.

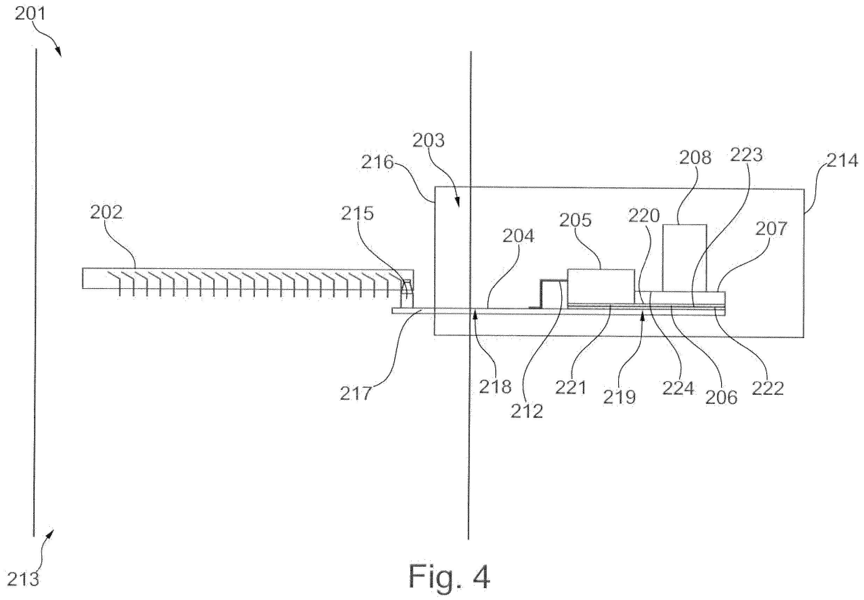

In der Figur 4 ist ein Ausführungsbeispiel einer elektrischen Heizvorrichtung 201 schematisch dargestellt. Die Heizvorrichtung 201 ist im Wesentlichen ähnlich wie die elektrische Heizvorrichtung 1 und die elektrische Heizvorrichtung 101 aufgebaut. Die elektrische Heizvorrichtung 201 kann in einer nicht dargestellten Heizungs- und/oder Klimaanlage eines Kraftfahrzeugs angeordnet sein.

Die elektrische Heizvorrichtung 201 weist ein Gehäuse 214 und eine Steuereinheit 203 mit einer Leiterplatte 204 auf. Die Leiterplatte 204 kann eine starre oder eine flexible Struktur aufweisen. Darüber hinaus kann es sich in verschiedenen Ausführungsformen der elektrischen Heizvorrichtung 201 bei der Leiterplatte 204 um eine einlagige Leiterplatte 204, eine zweilagige Leiterplatte 204 oder eine mehrlagige Leiterplatte 204 handeln.

Darüber hinaus weist die elektrische Heizvorrichtung 201 ein registerförmiges bzw. blockförmiges Heizelement 202 auf, welches optional von einem aus Metall oder Kunststoff gefertigten Rahmen eingefasst ist. Der Aufbau des Heizelements 202 kann in unterschiedlichen Ausführungsbeispielen variieren. In dem in der Figur 4 dargestellten Ausführungsbeispiel weist das Heizelement 202 eine Anzahl von PTC-Elementen und jeweils benachbart zu den PTC-Elementen angeordnete Kontaktbleche und Wärmeleitrippen auf. In alternativen Ausführungsformen kann das Heizelement 202 anstatt der PTC-Elemente auch andere Formen von Widerstandsheizelementen aufweisen. Das Heizelement 202 ist über einen auf der Leiterplatte 204 angeordneten Stecker 215 im Bereich einer ersten Gehäuseseite 216 mit der Leiterplatte 204 verbunden. In alternativen Ausführungsbeispielen ist das Heizelement 202 auf andere Weise mit der Leiterplatte 204 verbunden. In Figur 4 ist aufgrund der seitlichen Ansicht nur ein im Bereich der ersten Gehäuseseite 216 angeordneter Stecker 215 dargestellt. In unterschiedlichen Ausführungsbeispielen kann die Anzahl der Stecker 215 variieren.

Ein erster Leiterplattenrandbereich 217, in welchem der zumindest eine Stecker 215 angeordnet ist, ragt aus dem Gehäuse 214 heraus. In alternativen Ausführungsbeispielen ragt kein Bereich der Leiterplatte 204 aus dem Gehäuse 214 heraus. Das Heizelement 202 und der erste Leiterplattenbereich 217 ragen beispielhaft in den Luftkanal 213 der Heizungs- oder Klimaanlage hinein. Alternativ kann der erste Leiterplattenbereich 217 in einen anderweitigen zu erwärmenden Luftstrom, beispielsweise einen aus einem Bereich des Luftkanals 213 abgezweigten Teilluftstrom, hineinragen.

Das Heizelement 202 und die Leiterplatte 204 sind im Wesentlichen in einer ersten Ebene angeordnet, welche in dem in der Figur 4 dargestellten Ausführungsbeispiel den Strömungsquerschnitt des Luftkanals 213 vertikal schneidet.

Die Leiterplatte 204 weist eine zum Luftkanal 213 benachbart angeordnete erste Leiterplattenhälfte 218 und eine dem Luftkanal 213 abgewandte zweite Leiterplattenhälfte 219 auf. Auf der zweiten Leiterplattenhälfte 219 ist ein erster Metallträger 206 angeordnet. Der erste Metallträger 206 ist beispielhaft aus Kupfer oder einer Kupferlegierung ausgebildet und mittels eines Lots im Bereich der ersten Leiterplattenhälfte 218 mit der Leiterplatte 204 verbunden.

Eine der Leiterplatte 204 abgewandte Oberflächenseite 220 des ersten Metallträgers 206 weist eine zum Luftkanal 213 weisende erste Oberflächenhälfte 221 und eine vom Luftkanal 213 wegweisende zweite Oberflächenhälfte 222 auf. Dabei ist im Bereich der ersten Oberflächenhälfte 221 zumindest ein Leistungstransistor 205 angeordnet. In Figur 4 ist aufgrund der seitlichen Ansicht nur ein auf der ersten Oberflächenhälfte 221 angeordneter Leistungstransistor 205 dargestellt. In unterschiedlichen Ausführungsbeispielen kann die Anzahl der Leistungstransistoren 205 variieren. Der zumindest eine Leistungstransistor 205 kann insbesondere als ein Metall-Oxid-Halbleiter-Feldeffekttransistor ausgebildet sein. Der zumindest eine Leistungstransistor 205 ist über eine elektrische Verbindung 212 mit einer auf der Leiterplatte 204 angeordneten nicht dargestellten elektronischen Schaltung und/oder mit der Leiterplatte 204 beispielhaft mittels eines Lots verbunden.

Im Bereich der zweiten Oberflächenhälfte 222 des ersten Metallträgers 206 und benachbart zu dem zumindest einen Leistungstransistor 205 ist ein zweiter Metallträger 207 angeordnet. Der zweite Metallträger 207 weist eine erste Seite 223 auf, welche mit dem ersten Metallträger 206 beispielhaft mittels eines Lots verbunden ist. Darüber hinaus weist der zweite Metallträger 207 eine der ersten Seite 223 gegenüberliegende zweite Seite 224 auf. Auf der zweiten Seite 224 ist ein Anschluss 208 für eine Stromversorgung angeordnet, mittels dessen die elektrische Heizvorrichtung 201 an ein Bordstromnetz des Kraftfahrzeugs angeschlossen ist.

Darüber hinaus können die Leiterplatte 204 und/oder der erste Metallträger 206 und/oder der zweite Metallträger 207 und/oder ein anderer Teil der Steuereinheit 203 zumindest einen nicht dargestellten Anschluss für eine elektronische Verbindung der elektrischen Heizvorrichtung 201 mit einer Ansteuerlogik aufweisen, mittels dessen die elektrische Heizvorrichtung 201 beispielsweise über einen im Kraftfahrzeug angeordneten Bordcomputer ansteuerbar ist.

Dabei steht der Begriff Leistungstransistor stellvertretend für elektronische Schaltelemente, welche dazu dienen Ströme im Bereich von etwa einigen Ampere bis etwa 100 A oder mehr schalten zu können, um die Heizelemente der Heizvorrichtung mit einem Heizstrom versorgen zu können.

## Patentansprüche

1. Elektrische Heizvorrichtung (1, 101, 201) für ein Kraftfahrzeug, mit einem Heizelement (2, 102, 202) und mit einer Steuereinheit (3, 103, 203), wobei die Steuereinheit (3, 103, 203) eine Leiterplatte (4, 104, 204) mit zumindest einer elektronischen Schaltung aufweist und wobei die Steuereinheit (3, 103, 203) zumindest einen Leistungstransistor (5, 105, 205) aufweist, welcher mit der zumindest einen elektronischen Schaltung elektrisch verbunden ist, wobei die Steuereinheit (3, 103, 203) zumindest einen ersten Metallträger (6, 106, 206) aufweist, **dadurch gekennzeichnet, dass** der zumindest eine Leistungstransistor (5, 105, 205) auf dem zumindest einen ersten Metallträger (6, 106, 206) angeordnet und mit dem zumindest einen ersten Metallträger (6, 106, 206) verbunden ist und die Leiterplatte (4, 104, 204) und der zumindest eine erste Metallträger (6, 106, 206) gemeinsam in einer ersten Ebene angeordnet sind, wobei zwischen der Leiterplatte (4, 104, 204) und dem zumindest einen ersten Metallträger (6, 106, 206) eine Lücke (9, 109) angeordnet ist, wobei die Leiterplatte (4) zumindest ein benachbart zur Lücke (9, 109) angeordnetes erstes Verbindungselement (10) aufweist und der zumindest eine erste Metallträger (6, 106, 206) zumindest ein benachbart zur Lücke (9, 109) angeordnetes zweites Verbindungselement (11) aufweist, wobei das zumindest eine erste Verbindungselement (10) und das zumindest eine zweite Verbindungselement (11) komplementär zueinander ausgebildet sind und lösbar und/oder unlösbar miteinander verbindbar sind, so dass hiermit eine feste Zusammenfügung der Leiterplatte und dem zumindest ersten Metallträger ermöglicht wird.

2. Elektrische Heizvorrichtung (1, 101, 201) nach Anspruch 1, **dadurch gekennzeichnet, dass** die Steuereinheit (3, 103, 203) zumindest einen zweiten Metallträger (107, 207) aufweist, wobei der zumindest eine erste Metallträger (6, 106, 206) mit dem zumindest einen zweiten Metallträger (107, 207) verbunden ist.

3. Elektrische Heizvorrichtung (1, 101, 201) nach Anspruch 1 oder 2, **dadurch gekennzeichnet, dass** der zumindest eine Leistungstransistor (5, 105, 205) und der zweite Metallträger (107, 207) benachbart zueinander angeordnet und jeweils mit dem ersten Metallträger (6, 106, 206) verbunden sind.

4. Elektrische Heizvorrichtung (1, 101, 201) nach Anspruch 1, 2 oder 3, **dadurch gekennzeichnet, dass** auf dem zumindest einen ersten Metallträger (6, 106, 206) und/oder auf dem zumindest einen zweiten Metallträger (107, 207) zumindest ein Anschluss (8, 208) für eine Stromversorgung angeordnet ist/sind.

5. Elektrische Heizvorrichtung (1, 101, 201) nach einem der vorhergehenden Ansprüche, **dadurch gekennzeichnet, dass** der zumindest eine erste Metallträger (6, 106, 206) und/oder der zumindest eine zweite Metallträger (107, 207) aus Kupfer und/oder aus einer Kupferlegierung oder aus Aluminium oder aus einer Aluminiumlegierung ausgebildet ist/sind.

6. Elektrische Heizvorrichtung (1, 101, 201) nach einem der vorhergehenden Ansprüche, **dadurch gekennzeichnet, dass** die Leiterplatte (4, 104, 204) und der zumindest eine zweite Metallträger (107, 207), insbesondere durch Löten oder Kleben, miteinander verbunden sind.

7. Elektrische Heizvorrichtung (1, 101, 201) nach einem der vorhergehenden Ansprüche, **dadurch gekennzeichnet, dass** der zumindest eine Leistungstransistor (5, 105, 205) und der erste Metallträger (6, 106, 206) durch Löten oder Kleben miteinander verbunden sind.

8. Elektrische Heizvorrichtung (1, 101, 201) nach einem der vorhergehenden Ansprüche, **dadurch gekennzeichnet, dass** der zumindest eine Leistungstransistor (5, 105, 205) zumindest eine elektrische Verbindung (12, 112, 212) aufweist, welche mit der Leiterplatte (4, 104, 204) und/oder mit der elektronischen Schaltung, insbesondere durch Löten oder Kleben, verbunden ist.

9. Elektrische Heizvorrichtung (1, 101, 201) nach einem der vorhergehenden Ansprüche, **dadurch gekennzeichnet, dass** die elektrische Heizvorrichtung (1, 101, 201) benachbart zu oder in einem Luftkanal (13, 113, 213) einer Heizungs- oder Klimaanlage anordenbar ist, wobei die Leiterplatte (4, 104, 204) und/oder der erste Metallträger (6, 106, 206) und/oder der zweite Metallträger (107, 207) in den Luftkanal (13, 113, 213) und/oder in einen durch den Luftkanal (13, 113, 213) strömenden Luftstrom und/oder einen vom Luftstrom abgezweigten Teilluftstrom hineinragbar anordenbar ist/sind.

10. Heizungs- oder Klimaanlage, **dadurch gekennzeichnet, dass** in der Heizungs- oder Klimaanlage zumindest eine elektrische Heizvorrichtung (1, 101, 201) nach einem der Ansprüche 1 bis 9 anordenbar ist.

## Claims

1. An electric heater (1, 101, 201) for a motor vehicle, with a heating element (2, 102, 202) and with a control unit (3, 103, 203), wherein the control unit (3, 103, 203) has a circuit board (4, 104, 204) with at least one electronic circuit and wherein the control unit (3, 103, 203) has at least one power transistor (5, 105, 205) which is electrically connected to the at least one electronic circuit, wherein the control unit (3, 103, 203) has at least one first metal carrier (6, 106, 206), **characterised in that** the at least one power transistor (5, 105, 205) is arranged on the at least one first metal carrier (6, 106, 206) and is connected to the at least one first metal carrier (6, 106, 206) and the circuit board (4, 104, 204) and the at least one first metal carrier (6, 106, 206) are together arranged in a first plane, wherein a gap (9, 109) is arranged between the circuit board (4, 104, 204) and the at least one first metal carrier (6, 106, 206), wherein the circuit board (4) has at least one first connection element (10) arranged adjacent to the gap (9, 109) and the at least one first metal carrier (6, 106, 206) has at least one second connection element (11) arranged adjacent to the gap (9, 109), wherein the at least one first connection element (10) and the at least one second connection element (11) are formed complementary to one another and can be connected to one another in a releasable or non-releasable manner so that a fixed joining of the circuit board and the at least one first metal carrier is enabled.

2. The electric heater (1, 101, 201) according to claim 1, **characterised in that** the control unit (3, 103, 203) has at least one second metal carrier (107, 207), wherein the at least one first metal carrier (6, 106, 206) is connected to the at least one second metal carrier (107, 207).

3. The electric heater (1, 101, 201) according to claim 1 or 2, **characterised in that** the at least one power transistor (5, 105, 205) and the second metal carrier (107, 207) are arranged adjacent to one another and are respectively connected to the first metal carrier (6, 106, 206).

4. The electric heater (1, 101, 201) according to claim 1, 2 or 3, **characterised in that** at least one connection (8, 208) for a power supply is arranged on the at least one first metal carrier (6, 106, 206) and/or on the at least one second metal carrier (107, 207) .

5. The electric heater (1, 101, 201) according to one of the preceding claims, **characterised in that** the at least one first metal carrier (6, 106, 206) and/or the at least one second metal carrier (107, 207) is/are made from copper and/or from a copper alloy or from aluminium or from an aluminium alloy.

6. The electric heater (1, 101, 201) according to one of the preceding claims, **characterised in that** the circuit board (4, 104, 204) and the at least one second metal carrier (107, 207) are connected to one another, in particular by soldering or gluing.

7. The electric heater (1, 101, 201) according to one of the preceding claims, **characterised in that** the at least one power transistor (5, 105, 205) and the first metal carrier (6, 106, 206) are connected to one another by soldering or gluing.

8. The electric heater (1, 101, 201) according to one of the preceding claims, **characterised in that** the at least one power transistor (5, 105, 205) has at least one electric connection (12, 112, 212) which is connected to the circuit board (4, 104, 204) and/or to the electronic circuit, in particular by soldering or gluing.

9. The electric heater (1, 101, 201) according to one of the preceding claims, **characterised in that** the electric heater (1, 101, 201) can be arranged adjacent to or inside an air channel (13, 113, 213) of a heating or air-conditioning system, wherein the circuit board (4, 104, 204) and/or the first metal carrier (6, 106, 206) and/or the second metal carrier (107, 207) can be arranged such that they protrude into the air channel (13, 113, 213) and/or into an air flow flowing through the air channel (13, 113, 213) and/or into a partial air flow branched off the air flow.

10. A heating or air-conditioning system, **characterised in that** at least one electric heater (1, 101, 201) according to one of claims 1 to 9 can be arranged in the heating or air-conditioning system.

## Revendications

1. Dispositif de chauffage électrique (1, 101, 201) pour un véhicule automobile, ledit dispositif de chauffage électrique comprenant un élément chauffant (2, 102, 202) et comprenant une unité de commande (3, 103, 203), où l'unité de commande (3, 103, 203) présente une plaque de circuits imprimés (4, 104, 204) comportant au moins un circuit électronique, et où l'unité de commande (3, 103, 203) présente au moins un transistor de puissance (5, 105, 205) qui est connecté électriquement au circuit électronique au moins au nombre de un, où l'unité de commande (3, 103, 203) présente au moins un premier support métallique (6, 106, 206), **caractérisé en ce que** le transistor de puissance (5, 105, 205) au moins au nombre de un est disposé sur le premier support métallique (6, 106, 206) au moins au nombre de un et est assemblé avec le premier support métallique (6, 106, 206) au moins au nombre de un, et la plaque de circuits imprimés (4, 104, 204) et le premier support métallique (6, 106, 206) au moins au nombre de un sont disposés ensemble dans un premier plan, où un vide (9, 109) est disposé entre la plaque de circuits imprimés (4, 104, 204) et le premier support métallique (6, 106, 206) au moins au nombre de un, où la plaque de circuits imprimés (4) présente au moins un premier élément d'assemblage (10) disposé en étant adjacent au vide (9, 109), et le premier support métallique (6, 106, 206) au moins au nombre de un présente au moins un deuxième élément d'assemblage (11) disposé en étant adjacent au vide (9, 109), où le premier élément d'assemblage (10) au moins au nombre de un et le deuxième élément d'assemblage (11) au moins au nombre de un sont configurés en étant complémentaires l'un de l'autre et peuvent être assemblés l'un avec l'autre de façon détachable et / ou de façon non détachable, de sorte qu'un assemblage fixe de la plaque de circuits imprimés et du premier support métallique au moins au nombre de un est ainsi rendu possible.

2. Dispositif de chauffage électrique (1, 101, 201) selon la revendication 1, **caractérisé en ce que** l'unité de commande (3, 103, 203) présente au moins un deuxième support métallique (107, 207), où le premier support métallique (6, 106, 206) au moins au nombre de un est assemblé avec le deuxième support métallique (107, 207) au moins au nombre de un.

3. Dispositif de chauffage électrique (1, 101, 201) selon la revendication 1 ou 2, **caractérisé en ce que** le transistor de puissance (5, 105, 205) au moins au nombre de un et le deuxième support métallique (107, 207) sont disposés en étant adjacents l'un à l'autre et assemblés respectivement avec le premier support métallique (6, 106, 206).

4. Dispositif de chauffage électrique (1, 101, 201) selon la revendication 1, 2 ou 3, **caractérisé en ce qu'**au moins une / des connexion(s) (8, 208) pour une alimentation en courant électrique est / sont disposée(s) sur le premier support métallique (6, 106, 206) au moins au nombre de un et / ou sur le deuxième support métallique (107, 207) au moins au nombre de un.

5. Dispositif de chauffage électrique (1, 101, 201) selon l'une quelconque des revendications précédentes, **caractérisé en ce que** le premier support métallique (6, 106, 206) au moins au nombre de un et / ou le deuxième support métallique (107, 207) au moins au nombre de un est / sont en cuivre et /ou composé(s) d'un alliage de cuivre, ou bien est / sont en aluminium et /ou composé(s) d'un alliage d'aluminium.

6. Dispositif de chauffage électrique (1, 101, 201) selon l'une quelconque des revendications précédentes, **caractérisé en ce que** la plaque de circuits imprimés (4, 104, 204) et le deuxième support métallique (107, 207) au moins au nombre de un sont assemblés l'un avec l'autre, en particulier par brasage ou par collage.

7. Dispositif de chauffage électrique (1, 101, 201) selon l'une quelconque des revendications précédentes, **caractérisé en ce que** le transistor de puissance (5, 105, 205) au moins au nombre de un et le premier support métallique (6, 106, 206) sont assemblés l'un avec l'autre, par brasage ou par collage.

8. Dispositif de chauffage électrique (1, 101, 201) selon l'une quelconque des revendications précédentes, **caractérisé en ce que** le transistor de puissance (5, 105, 205) au moins au nombre de un présente au moins une connexion électrique (12, 112, 212) qui est reliée, en particulier par brasage ou par collage, à la plaque de circuits imprimés (4, 104, 204) et / ou au circuit électronique.

9. Dispositif de chauffage électrique (1, 101, 201) selon l'une quelconque des revendications précédentes, **caractérisé en ce que** le dispositif de chauffage électrique (1, 101, 201) peut être disposé en étant adjacent à un conduit d'air (13, 113, 213) d'un système de chauffage ou de climatisation, ou bien en étant placé dans ledit conduit d'air, où la plaque de circuits imprimés (4, 104, 204) et / ou le premier support métallique (6, 106, 206) et / ou le deuxième support métallique (107, 207) peut / peuvent être disposé(s) en pouvant pénétrer dans le conduit d'air (13, 113, 213) et / ou dans un flux d'air en circulation à travers le conduit d'air (13, 113, 213) et / ou dans un flux d'air partiel ramifié par rapport au flux d'air.

10. Système de chauffage ou de climatisation, **caractérisé en ce qu'**au moins un dispositif de chauffage électrique (1, 101, 201) selon l'une quelconque des revendications 1 à 9 peut être disposé dans le système de chauffage ou de climatisation.
